# FASCICULE DE BREVET EUROPEEN

(11) **EP 0 483 001 B1**
(45) Date de publication et mention de la délivrance du brevet: **15.03.1995**
(21) Numéro de dépôt: 91402826.1
(22) Date de dépôt: 23.10.1991
(51) Int. Cl.: G01F 23/32, G01F 23/36

(54) **Dispositif à flotteur indexe sur le fond pour la mesure de niveau liquide dans un réservoir**
Vorrichtung mit Bodenindexschwimmer zur Messung des Flüssigkeitsniveaus in einem Behälter
Device with a bottom float index to measure liquid level in a tank

(30) Priorité: 24.10.1990 FR 9013173
(43) Date de publication de la demande: 29.04.1992
(73) Titulaire: JAEGER, F-92303 Levallois-Perret (FR)
(72) Inventeur: Bezard, Jean-Jacques, F-78400 Chatou (FR)
(74) Mandataire: Martin, Jean-Jacques

(56) Documents cités:
- EP-A- 0 403 391
- DE-A- 2 740 653
- DE-A- 3 151 161

## Description

La présente invention concerne le domaine du jaugeage de niveau et/ou volume de liquide contenu dans un réservoir.

La présente invention trouve notamment, mais non exclusivement, application à la mesure de carburant contenu dans un réservoir de véhicule automobile.

La présente invention concerne plus précisément un dispositif de jaugeage du type connu en soi comprenant :
- une embase destinée à être fixée sur une paroi du réservoir,
- un support articulé autour d'un axe horizontal sur une partie de l'embase interne au réservoir,
- un patin porté à une extrémité du support qui est éloignée de l'axe d'articulation de celui-ci, le patin étant sollicité vers la paroi inférieure du réservoir, ou le cas échéant la paroi supérieure de celui-ci,
- un flotteur porté par un bras articulé autour d'un axe horizontal sur le support pour suivre le niveau du liquide, et
- un ensemble transducteur comprenant deux éléments portés l'un par le bras articulé et l'autre par le support.

De préférence l'ensemble transducteur comprend un curseur qui coopère avec un élément résistif pour définir une résistance variable en fonction du niveau de liquide contenu dans le réservoir.

De tels dispositifs sont par exemple décrits dans les documents US-A-3449955, US-A-3925747 et DE-A-3310704.

Le document EP-A-403 391 décrit un autre dispositif de l'état de la technique selon l'article 54(3) CBE.

Plus précisément, selon les documents précités, le patin porté à l'extrémité du support est sollicité vers la paroi inférieure du réservoir.

Ces dispositifs sont généralement dénommés "dispositifs de jaugeage indexés sur le fond".

Le support de l'ensemble transducteur étant sollicite en permanence contre la paroi inférieure du réservoir, ces dispositifs permettent d'améliorer la fiabilité du jaugeage dans le fond du réservoir, c'est-à-dire lorsque le volume de carburant restant dans le réservoir est faible. Il s'agit là, il est vrai, d'une information importante, devant donner lieu à la génération d'une alarme si un niveau ou volume minimal de reserve est détecté.

Les dispositifs de jaugeage indexés sur le fond s'avèrent particulièrement intéressants lorsque les réservoirs sont susceptibles de déformation importante, comme c'est le cas pour les réservoirs de carburant en matière plastique installés couramment de nos jours sur les véhicules automobiles.

Cependant ces dispositifs de jaugeage indexés sur le fond jusqu'ici proposés ne donnent pas totalement satisfaction.

En effet, l'amélioration du jaugeage dans le fond du réservoir, pour garantir la génération correcte de l'alerte, est faite au détriment de la fiabilité du jaugeage en partie supérieure de celui-ci.

Ainsi par exemple, des dispositifs de jaugeage indexés sur le fond, du type décrit dans les documents précités, équipant deux réservoirs pleins, fourniront des informations différentes si les deux réservoirs subissent des déformations en hauteur non identiques. De même, et en conséquence, les dispositifs connus de jaugeage indexés sur le fond peuvent délivrer des indications variables après remplissage du réservoir.

Un tel fonctionnement donne lieu régulièrement à des réclamations de la part des utilisateurs.

La présente invention a pour but d'éliminer les inconvénients de la technique antérieure et de proposer un nouveau dispositif de jaugeage qui délivre une information de jaugeage fiable tant en partie inférieure, qu'en partie supérieure du réservoir.

Ce but est atteint selon la présente invention, grâce à un dispositif de jaugeage de niveau et/ou volume de liquide contenu dans un réservoir, du type comprenant :
- une embase destinée à être fixée sur une paroi du réservoir,
- un support articulé autour d'un axe horizontal sur une partie de l'embase interne au réservoir,
- un patin porté à l'extrémité du support qui est éloignée de l'axe d'articulation de celui-ci, le patin étant sollicité vers l'une des parois principales, inférieure ou supérieure, du réservoir,
- un flotteur porté par un bras articulé autour d'un axe horizontal sur le support pour suivre le niveau de liquide, et
- un ensemble transducteur comprenant deux éléments portés l'un par le bras articulé et l'autre par le support, caractérisé par le fait que :
- l'axe d'articulation du support sur l'embase est placé à proximité de l'autre paroi principale, supérieure ou inférieure, du réservoir,
- l'axe d'articulation du bras de flotteur sur le support est sensiblement équidistant de l'axe d'articulation du support sur l'embase et de l'axe du patin,
- la distance séparant l'axe d'articulation du bras de flotteur sur le support et l'axe d'articulation du support sur l'embase est sensiblement égale à la distance séparant l'axe d'articulation du bras de flotteur sur le support et l'axe du flotteur, et
- l'axe d'articulation du support sur l'embase et l'axe du patin sont placés en permanence d'un même côte d'un plan vertical passant par l'axe d'articulation du bras de flotteur sur le support.

D'autres caractéristiques, buts et avantages de la présente invention apparaîtront à la lecture de la description détaillée qui va suivre, et en regard des dessins annexés, donnés à titres d'exemples non limitatifs et sur lesquels :
- la figure 1 représente une vue schématique en coupe verticale d'un dispositif de jaugeage conforme à la présente invention et équipant un réservoir,
- la figure 2 représente à échelle réduite deux positions du même dispositif de jaugeage en cas de déformation du réservoir,
- la figure 3 représente selon une vue schématique en coupe verticale un deuxième mode de réalisation conforme à la présente invention,
- la figure 4 représente selon une vue schématique en coupe verticale un troisième mode de réalisation conforme à la présente invention,
- la figure 5 représente selon une vue schématique en coupe verticale un quatrième mode de réalisation conforme à la présente invention,
- la figure 6 représente selon une vue schématique en coupe verticale un cinquième mode de réalisation conforme à la présente invention, et
- la figure 7 représente selon une vue en coupe verticale un sixième mode de réalisation conforme à la présente invention.

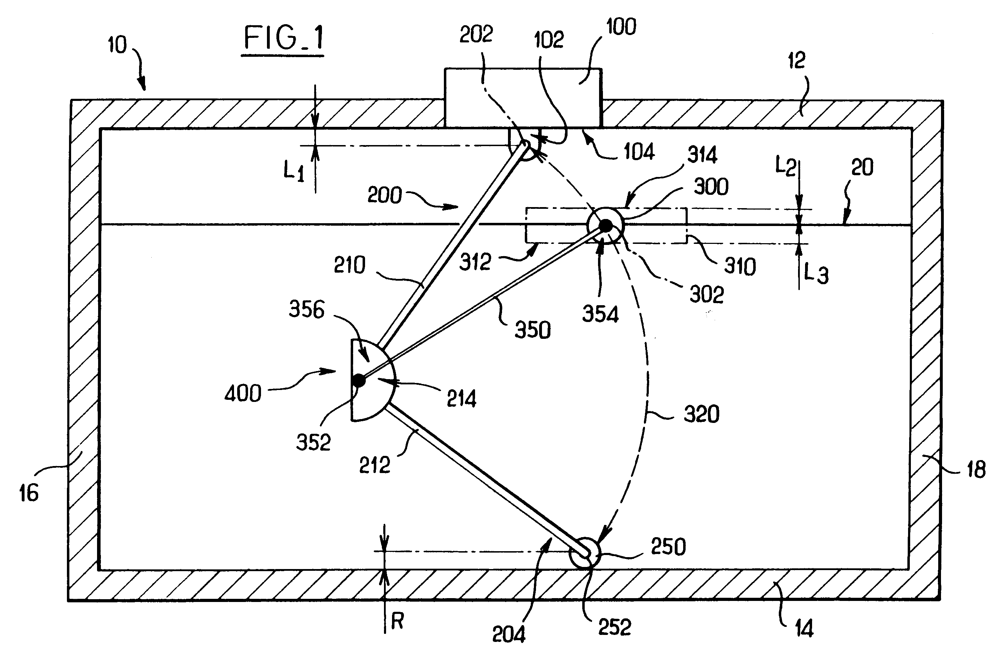

On aperçoit sur les figures 1 à 7 annexées un réservoir 10 équipé d'un dispositif de jaugeage conforme à la présente invention.

Le réservoir 10 est formé de deux parois principales respectivement supérieure 12, et inférieure 14 et de parois latérales raccordant celles-ci. Deux parois latérales 16, 18 sont visibles sur les figures 1 à 7.

Selon la représentation donnée sur les figures 1 à 7, les parois principales supérieure 12 et inférieure 14 sont horizontales et planes, tandis que les parois latérales visibles 16 et 18 sont verticales et planes. Cette représentation ne doit cependant pas être considérée comme limitative. Les parois 12, 14, 16 et 18 peuvent ne pas être planes. Par ailleurs, les parois principales supérieure et inférieure 12, 14 peuvent ne pas être parfaitement horizontales, tandis que les parois latérales 16 et 18 peuvent ne pas être parfaitement verticales.

Le dispositif de jaugeage conforme à la présente invention représenté sur les figures annexées, comprend essentiellement une embase 100, un support 200, un patin 250, un flotteur 300 porté par un bras 350 et un ensemble de transducteur 400.

Sur les figures annexées le niveau de carburant ou liquide contenu dans le réservoir 10 est référencé 20.

L'embase 100 est conçue pour être fixée, de façon étanche, sur une paroi du réservoir 10.

Selon la représentation donnée sur la figure 1, l'embase 100 est conçue pour être fixée sur la paroi supérieure 12.

La représentation de l'embase 100 donnée sur les figures annexées n'est que schématique. En pratique, et de façon connue en soi, l'embase 100 peut être munie de tubulures, notamment pour l'aspiration et le refoulement de carburant.

Le support 200 est articulé sur une partie 102 de l'embase interne au réservoir, autour d'un axe 202 horizontal. L'axe 202 d'articulation du support 200 est ainsi placé à proximité de la paroi supérieure 12.

Le patin 250 est porté à l'extrémité 204 du support 200 qui est éloignée, c'est-à-dire opposée, à l'axe d'articulation 202 précité. Le patin 250 est sollicité vers la paroi principale du réservoir éloignée à cet axe d'articulation 202. Il s'agit selon la représentation de la figure 1 de la paroi inférieure 14.

Le patin 250 peut être sollicité vers la paroi principale 14 du réservoir 10 par gravité, c'est-à-dire par le poids du support 200 articulé autour de l'axe 202. Cependant, le cas échéant un organe élastique peut être placé entre l'embase 100 et le support 200 pour solliciter le patin 250 vers la paroi 14 du réservoir.

De préférence le patin 250 présente une section droite circulaire de révolution centré sur un axe horizontal 252.

Le patin 250 peut être fixé rigidement sur l'extrémité 204 du support 200.

Cependant de préférence le patin 250 est monté à rotation sur l'extrémité 204 du support 200 autour d'un axe horizontal qui coïncide avec l'axe 252 précité, c'est-à-dire l'axe central du patin 250.

En pratique le patin 250 peut être formé d'un chariot comprenant au moins une roue articulée sur l'extrémité 204 du support 200 autour de son axe central horizontal.

Le patin 250 peut être réalisé par exemple à base de matière thermo-plastique telle que du polyamide ou du polyacétal. Le patin 250 formé de préférence d'une roue articulée sur l'extrémité 204 du support 200 permet à celui-ci de suivre sans blocage les fluctuations en hauteur de la paroi 14 du réservoir.

Selon le mode de réalisation particulier représenté sur les figures annexées, le support 200 est formé de deux éléments rectilignes 210, 212 inclinés entre eux. L'élément 210 est articulé sur l'embase 100 autour de l'axe 202. L'élément 212 porte le patin 250. La zone de jonction entre les deux éléments 210, 212 est référencée 214.

Cette zone de jonction 214 porte l'ensemble transducteur 400. On rappelle que cet ensemble transducteur 400 comprend un curseur qui coopère avec un élément résistif. Le flotteur 300 est porté à l'extrémité libre 354 du bras 350. Le bras 350 est articulé par sa seconde extrémité 356, autour d'un axe horizontal 352 sur le support 200. Plus précisément, le bras 350 est articulé autour de l'axe horizontal 352 sur la zone de jonction 214 des éléments 210, 212, au niveau de l'ensemble transducteur 400.

De préférence, le curseur de l'ensemble transducteur 400 est porté par le bras 350 tandis que l'élément résistif associé est porté rigidement par le support 200. En variante cependant on peut placer le curseur de l'ensemble transducteur 400 rigidement sur le support 200, tandis que l'élément résistif associé serait placé sur le bras de flotteur 350.

On rappelle que lors d'une variation de niveau de liquide, le bras de flotteur 350 se déplaçant à pivotement par rapport au support 200, le curseur de l'ensemble transducteur 400 est déplacé par rapport à l'élément résistif associé, et l'ensemble transducteur 400 définit ainsi une résistance variable en fonction du niveau de liquide contenu dans le réservoir.

Le flotteur 300 peut faire l'objet de différentes variantes de réalisation.

Comme illustré en traits continus sur la figure 1, le flotteur 300 peut présenter une section verticale circulaire de révolution. Le flotteur 300 peut ainsi être formé d'une sphère ou d'un cylindre d'axe central horizontal. Le flotteur 300 de section verticale circulaire de révolution peut être fixé rigidement sur l'extrémité 354 du bras 350. Le flotteur 300 peut encore être monté à rotation sur l'extrémité 354 du bras 350 autour d'un axe horizontal 302 qui coïncide de préférence avec son axe central, et avec son centre de flottaison.

En variante comme représenté en traits interrompus sur la figure 1, sous la référence 310, le flotteur 300 peut présenter une section verticale non circulaire de révolution, telle que par exemple une section verticale généralement rectangulaire. Dans ce cas le flotteur est de préférence articulé sur l'extrémité 354 du bras 350 autour d'un axe horizontal 302. Cet axe 302 coïncide de préférence avec le centre de flottaison du flotteur 310.

On notera que l'utilisation d'un flotteur 310 de section verticale non circulaire de révolution permet d'utiliser un flotteur de faible encombrement vertical tout en possédant un volume important, et par conséquent d'optimiser le jaugeage en partie supérieure et en partie inférieure du réservoir.

On notera que les axes 202, 252 et 352 précités sont horizontaux et parallèles entre eux. De même, l'axe 302 du flotteur 300 est avantageusement parallèle aux axes 202, 252 et 352.

Selon une première caractéristique importante de la présente invention, l'axe 352 d'articulation du bras 350 sur le support 200 est équidistant de l'axe 202 d'articulation du support 200 sur l'embase 100 et de l'axe 252 du patin 250.

En d'autres termes, l'axe 352 d'articulation du bras 350 sur le support 200 est avantageusement situé sur une médiatrice du segment contenu dans un plan vertical et reliant les axes 252 et 352.

Selon une autre caractéristique avantageuse de la présente invention, la distance séparant l'axe 352 d'articulation du bras 350 sur le support 200 et l'axe 302 du flotteur 300 est au moins sensiblement égale à la distance séparant l'axe 352 et l'axe 202 et à la distance séparant les axes 352 et 252.

Ainsi, quelles que soient les déformations en hauteur du réservoir 10, le bras 350 occupera toujours la même position par rapport au support 200, lors du jaugeage des niveaux maximal et minimal dans le réservoir, et par conséquent l'ensemble transducteur 400 définira des valeurs de résistances constantes correspondant au niveau de jaugeage maximal et minimal quelles que soient les déformations du réservoir 10.

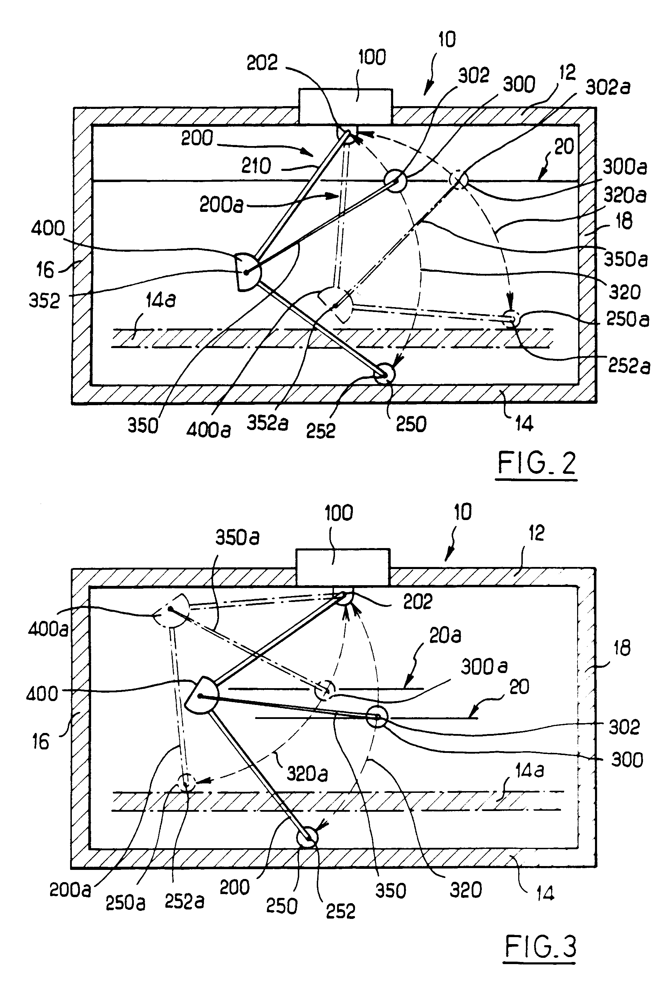

On a représenté sur la figure 2 un dispositif de jaugeage conforme à celui précédemment décrit et représenté sur la figure 1. Plus précisément, sur la figure 2, le dispositif de jaugeage est representé dans deux positions différentes résultant de déformations en hauteur de la paroi inférieure 14 du réservoir 10.

Plus précisément encore sur la figure 2, le dispositif de jaugeage est représenté en traits continus dans une position identique à celle de la figure 1, tandis que le dispositif de jaugeage est représenté en traits interrompus sur la figure 2 dans une seconde position résultant d'une déformation vers le haut de la paroi inférieure 14 du réservoir.

La seconde position illustrée en traits interrompus sur la figure 2 est assortie d'indice a.

Comme indiqué précédemment, lors de déformation de la paroi inférieure 14 du réservoir, le support 200 glisse ou roule sur celle-ci grâce à la présence du patin 250. Ainsi l'extrémité du support 200 éloignée de l'axe 202 repose toujours contre la paroi inférieure 14.

Comme indiqué précédemment, lors de jaugeage d'un niveau minimal ou d'un niveau maximal, quelle que soit la position du fond 14 du réservoir, le bras 350 et le support 200 occupent toujours des positions relatives identiques, et par conséquent le curseur et la piste résistive de l'ensemble transducteur occupent des positions identiques et définissent une résistance fiable.

Le trajet suivi par l'axe 302 du flotteur 300 est référencé 320 sur les figures annexées.

On notera que si le bras de flotteur 350 possède un rayon assez grand, la corde reliant les axes 202 et 252 peut être assimilée à l'arc circulaire 320 suivi par l'axe 302 du flotteur 300. Dans ce cas, le dispositif de jaugeage donne non seulement une information parfaitement fiable aux niveaux de jaugeage minimal et maximal, mais délivre également une information correcte en pourcentage de niveau de liquide dans le réservoir, quelles que soient les déformations de la paroi inférieure 14 de celui-ci.

Comme indiqué précédemment il est important que les axes 202, 252 et 352 ne soient pas alignés, c'est-à-dire que le support 200 ne soit pas rectiligne, de sorte que le bras 350 ne franchisse jamais la verticale au cours de son déplacement. En d'autres termes, le segment reliant l'axe d'articulation 352 du bras 350 et l'axe 302 du flotteur 300 ne doit pas franchir la verticale.

Ainsi, selon une autre caractéristique importante de la présente invention, l'axe 202 d'articulation du support 200 sur l'embase 100 et l'axe 252 du patin 250 doivent être toujours situés du même côté d'un plan vertical passant par l'axe 352 d'articulation du bras 350 sur le support 200.

En d'autres termes, soit les axes 352 et 252 doivent être placés sur des côtés respectivement opposés d'un plan vertical passant par l'axe 202, soit les axes 352 et 202 doivent être placés sur des côtés opposés d'un plan vertical passant par l'axe 252.

Selon une autre caractéristique importante de la présente invention, de préférence le rayon R du patin 250 est égal à la distance L3 séparant l'axe 302 du flotteur 300 de sa génératrice ou surface inférieure. Ainsi dans le cas d'un flotteur cylindrique de révolution 300, le rayon R du patin 250 est avantageusement égal au rayon L3 du flotteur 300. Dans le cas d'un flotteur 310 de section rectangulaire, le rayon R du patin 250 est avantageusement égal à la hauteur L3 séparant l'axe 302 du flotteur 310 de la surface inférieure 312 de celui-ci.

Par ailleurs, selon une autre caractéristique préférentielle de la présente invention, la distance L1 séparant l'axe 202 d'articulation du support 200 sur l'embase 100 de la surface inférieure 104 de l'embase 100 est égale à la distance L2 séparant l'axe 302 du flotteur 300 de sa génératrice ou surface supérieure. Ainsi dans le cas d'un flotteur 300 de section verticale circulaire de révolution, la distance L1 précitée est égale au rayon L2 du flotteur 300. Dans le cas d'un flotteur 310 de section verticale rectangulaire, la distance L1 précitée est égale à la hauteur L2 séparant l'axe 302 du flotteur 310 de sa surface supérieure 314.

Grâce aux dispositions qui viennent d'être indiquées, en position de jaugeage minimale, l'axe 302 du flotteur 300 est coaxial à l'axe 252 du patin 250. De plus, en position de jaugeage maximal, l'axe 302 du flotteur 300 est coaxial avec l'axe d'articulation 202 du support 200.

Selon le premier mode de réalisation représenté sur les figures 1 et 2, les axes 252 et 352 sont disposés respectivement de part et d'autre d'un plan vertical passant par l'axe 202.

Le second mode de réalisation représenté sur la figure 3, ne diffère de celui précédemment décrit et représenté sur les figures 1 et 2 que par le fait que les axes 252 et 352 sont situés d'un même côté d'un plan vertical passant par l'axe 202.

L'homme de l'art notera à l'examen comparé des figures 2 et 3, que les courbes de jaugeage définies par le trajet 320 suivi par le flotteur 300 diffèrent légèrement de l'un à l'autre cas. Le choix entre les deux dispositions représentées sur les figures 2 et 3 pourra être opéré en fonction de chaque cas particulier, c'est-à-dire de la géométrie du réservoir 10, du fait de savoir si la précision maximale est recherchée en partie supérieure ou en partie inférieure du réservoir, et enfin et surtout pour suivre la ligne de moindre agitation du réservoir. On rappelle que l'on entend par ligne de moindre agitation du fluide dans le réservoir, la zone de celui-ci au niveau de laquelle les fluctuations du fluide dues par exemple aux accélérations du véhicule sont les plus faibles.

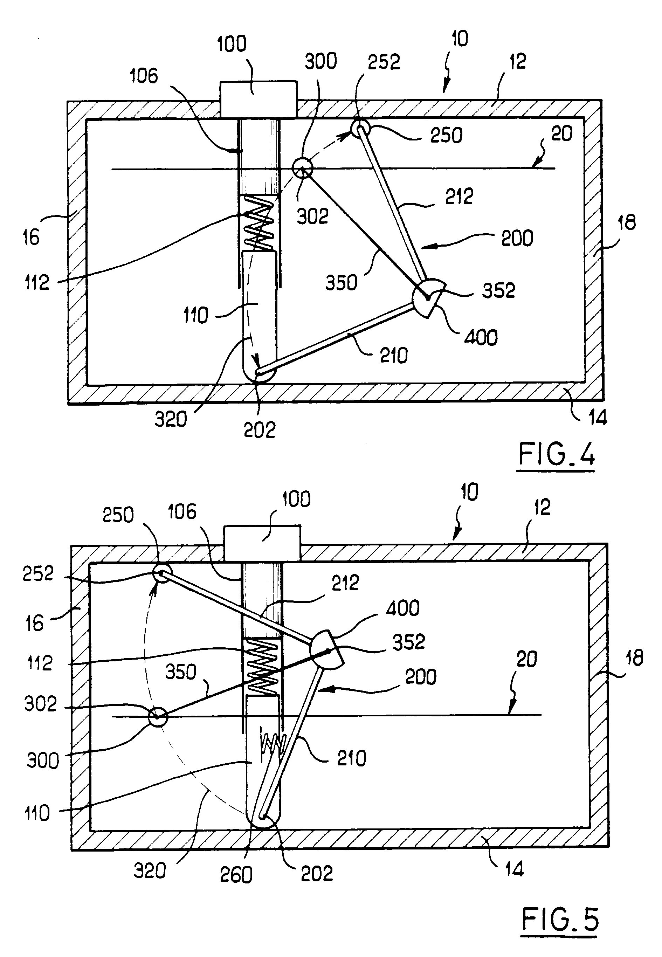

On a représenté sur les figures 4 et 5 annexées un troisième et un quatrième mode de réalisation selon lesquels l'embase 100 reste fixée sur la paroi supérieure 12 du réservoir, mais néanmoins l'axe d'articulation 202 du support 200 est placé à proximité de la paroi inférieure 14 du réservoir.

Pour cela, le support 200 est articulé, autour de l'axe horizontal 202 sur un moyen support 110 indexé sur le fond 14 du réservoir.

L'élément support 110 est guidé à translation verticale par l'embase 100, par exemple dans une cheminée 106 solidaire de l'embase 100. L'élément support 110 est poussé contre le fond 14 du réservoir par des moyens élastiques 112. Le patin 250 est sollicité vers la paroi du réservoir opposée à celle adjacente à l'axe 202. Il s'agit par conséquent selon les figures 4 et 5 de la paroi supérieure 12.

Comme indiqué précédemment le patin 250 peut être sollicité vers la paroi supérieure 12 du réservoir par simple gravité. Le cas échéant cependant comme représenté sur la figure 5, le patin 250 peut être sollicité vers la paroi supérieure 12 du réservoir par un moyen élastique de sollicitation 260 intercalé entre l'élément support 110 et le support 200.

Les deux modes de réalisation représentés respectivement sur les figures 4 et 5 diffèrent entre eux, de façon comparable aux deux modes de réalisation représentés sur les figures 2 et 3, par la position relative des axes 202, 252 et 352.

Selon le troisième mode de réalisation représenté sur la figure 4, de façon comparable à la figure 3, les axes 252 et 352 sont placés d'un même côté d'un plan vertical passant par l'axe 202. En revanche selon le quatrième mode de réalisation représenté sur la figure 5, les axes 252 et 352 sont placés respectivement de part et d'autre d'un plan vertical passant par l'axe 202.

L'homme de l'art comprendra aisément que le fonctionnement du dispositif représenté sur les figures 4 et 5 reste identique à celui précédemment décrit en regard des figures 1 à 3.

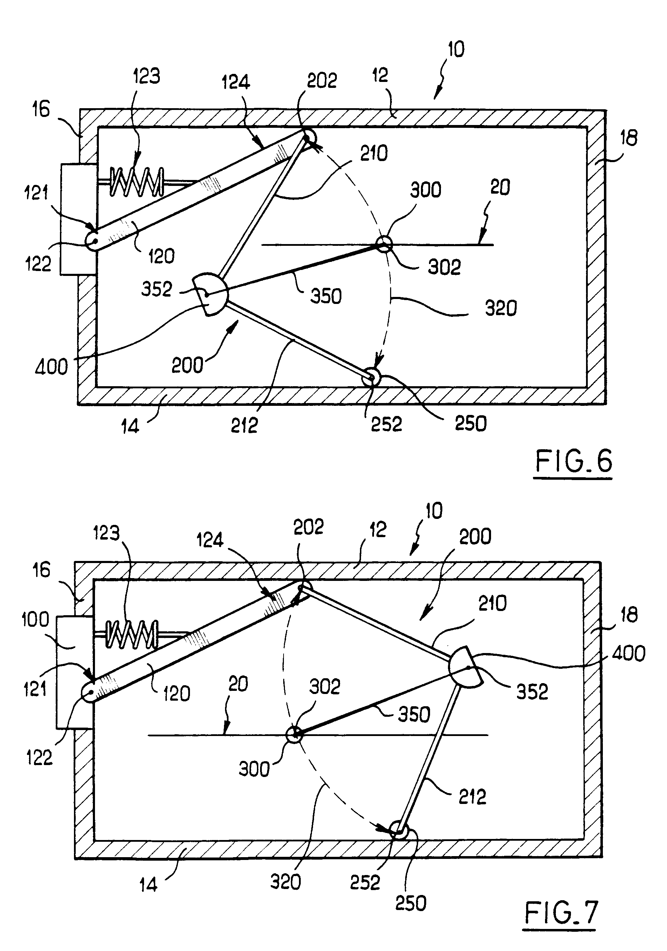

Selon les cinquième et sixième modes de réalisation représentés sur les figures 6 et 7, l'embase 100 est conçue pour être fixée non plus sur la paroi supérieure 10 du réservoir, mais sur une paroi latérale 16, généralement verticale, de celui-ci.

En variante de la disposition représentée sur les figures 6 et 7, l'embase 100 pourrait être fixée sur une paroi inclinée sur la verticale ou une paroi horizontale différente de la paroi supérieure du réservoir.

Par ailleurs, le support 200 n'est plus articulé directement sur l'embase 100 mais sur un élément support intermédiaire 120. L'élément support 120 est articulé sur l'embase 100 autour d'un axe horizontal 122 par une première de ses extrémités 121. Un organe élastique 123 intercalé entre l'embase 100 et l'élément support intermédiaire 120 sollicite la seconde extrémité 124 de celui-ci contre la surface interne de la paroi supérieure 12 du réservoir.

L'élément support 200 est lui-même articulé autour de l'axe horizontal 202 précité sur cette seconde extrémité 124 de l'élément support intermédiaire 120.

Les deux modes de réalisation représentés sur les figures 6 et 7 diffèrent entre eux par la disposition relative des axes 202, 252 et 352.

Selon le mode de réalisation représenté sur la figure 6, les axes 252 et 352 sont disposés respectivement de part et d'autre d'un plan vertical passant par l'axe 202. Par contre, selon le mode de réalisation représenté sur la figure 7, les axes 252 et 352 sont placés d'un même côté d'un plan vertical passant par l'axe 202.

Le fonctionnement des dispositifs représentés sur les figures 6 et 7 reste identique à celui précédemment décrit en regard des figures 1 à 5.

Bien entendu, on peut envisager, en variante de réalisation des figures 6 et 7, d'indexer l'extrémité 124 de l'élément support intermédiaire 120 contre la paroi inférieure 14 du réservoir et non point contre la paroi supérieure 12 de celui-ci. Dans ce cas, les dispositions du support 200 seraient conformes à celles représentées sur les figures 4 et 5 et non point à celles des figures 2 et 3.

On notera que quelles que soient les variations de hauteur du réservoir 10, le segment passant par les axes 202 et 252 ne doit jamais franchir la verticale. Pour cela, la distance séparant les axes 202, 252, additionnée du rayon du patin 250 et de la distance séparant l'axe 202 de la surface inférieure 104 de l'embase doit être supérieure à la plus grande hauteur possible du réservoir 10.

Selon une autre variante de réalisation, le patin 250 peut présenter une section verticale non circulaire de révolution. Cependant, de préférence, le patin 250 est alors articulé à rotation autour de l'axe 252 sur l'extrémité 204 du support 200.

On peut également envisager d'utiliser un patin 250 non circulaire de révolution et fixé rigidement sur l'extrémité 204 du support 200.

Dans ce cas l'expression "axe du patin" coïncide avec l'axe central de la zone des points de rencontre des normales à la surface du réservoir dressées à partir des points de contact du patin 250 sur le réservoir.

Bien entendu la présente invention n'est pas limitée aux modes de réalisation qui viennent d'être décrits mais s'étend à toutes variantes conformes à son esprit.

Pour faciliter le montage du dispositif dans un réservoir, des butées sont de préférence prévues pour limiter la course des différents ressorts de sollicitation.

## Revendications

1. Dispositif de jaugeage de niveau et/ou volume de liquide contenu dans un réservoir, du type comprenant :
- une embase (100) destinée à être fixée sur une paroi du réservoir,
- un support (200) articulé autour d'un axe horizontal (202) sur une partie de l'embase interne au réservoir,
- un patin (250) porté à l'extrémité (204) du support (200) qui est éloignée de l'axe d'articulation (202) de celui-ci, le patin (250) étant sollicité vers l'une des parois principales (12, 14) inférieure ou supérieure, du réservoir,
- un flotteur (300) porté par un bras (350) articulé autour d'un axe horizontal (352) sur le support (200) pour suivre le niveau de liquide, et
- un ensemble transducteur (400) comprenant deux éléments portés l'un par le bras articulé (350) et l'autre par le support (200), caractérisé par le fait que :
- l'axe (202) d'articulation du support (200) sur l'embase (100) est placé à proximité de l'autre paroi principale (12), supérieure ou inférieure, du réservoir (10),
- l'axe d'articulation (352) du bras (350) de flotteur sur le support (200) est sensiblement équidistant de l'axe d'articulation (202) du support (200) sur l'embase (100) et de l'axe (252) du patin (250),
- la distance séparant l'axe (352) d'articulation du bras de flotteur (350) sur le support (200) et l'axe (202) d'articulation du support (200) sur l'embase (100) est sensiblement égale à la distance séparant l'axe (352) d'articulation du bras de flotteur (350) sur le support (200) et l'axe (302) du flotteur (300), et
- l'axe (202) d'articulation du support (200) sur l'embase (100) et l'axe (252) du patin (250) sont placés en permanence d'un même côté d'un plan vertical passant par l'axe (352) d'articulation du bras de flotteur (350) sur le support (200).

2. Dispositif de jaugeage selon la revendication 1, caractérisé par le fait que l'axe (202) d'articulation du support (200) sur l'embase (100), l'axe (252) du patin (250), l'axe (352) d'articulation du bras de flotteur (350) sur le support (200) et l'axe (302) du flotteur (300) sont horizontaux et parallèles entre eux.

3. Dispositif de jaugeage selon l'une des revendications 1 ou 2, caractérisé par le fait que le support (200) est formé de deux éléments (210, 212) inclinés entre eux.

4. Dispositif de jaugeage selon l'une des revendications 1 à 3, caractérisé par le fait que la distance séparant l'axe (202) d'articulation du support (200) sur l'embase (100) et l'axe (252) du patin (250), additionnée du rayon du patin (250) et de la distance séparant l'axe (202) d'articulation du support (200) sur l'embase (100) et la surface inférieure (104) de celle-ci, est supérieure à la plus grande hauteur possible du réservoir (10).

5. Dispositif de jaugeage selon l'une des revendications 1 à 4, caractérisé par le fait que le patin (250) présente une section droite verticale circulaire de révolution.

6. Dispositif de jaugeage selon l'une des revendications 1 à 5, caractérisé par le fait que le patin (250) est fixé rigidement sur le support (200).

7. Dispositif de jaugeage selon l'une des revendications 1 à 5, caractérisé par le fait que le patin (250) est monté à rotation sur le support (200) autour de son axe (252).

8. Dispositif de jaugeage selon l'une des revendications 1 à 7, caractérisé par le fait que le flotteur (300) est fixé rigidement sur le bras (350) et possède une section droite verticale circulaire de révolution.

9. Dispositif de jaugeage selon l'une des revendications 1 à 7, caractérisé par le fait que le flotteur présente une section droite verticale circulaire de révolution et qu'il est articulé sur le bras (350) autour de son axe.

10. Dispositif de jaugeage selon l'une des revendications 1 à 7, caractérisé par le fait que le flotteur (310) est monté à rotation sur le bras (350).

11. Dispositif de jaugeage selon l'une des revendications 1 à 10, caractérisé par le fait que la distance (L1) séparant l'axe (202) d'articulation du support (200) sur l'embase (100) et la surface inférieure (104) de l'embase (100) est sensiblement égale à la distance (L2) séparant l'axe (302) du flotteur et sa génératrice supérieure (314).

12. Dispositif de jaugeage selon l'une des revendications 1 à 11, caractérisé par le fait que le rayon (R) du patin (250) est au moins sensiblement égal à la distance (L3) séparant l'axe (302) du flotteur (300) et sa génératrice inférieure (312).

13. Dispositif de jaugeage selon l'une des revendications 1 à 12, caractérisé par le fait que le rayon (L2, L3) du flotteur (300) est sensiblement égal au rayon (R) du patin (250) et à la distance (L1) qui sépare l'axe (202) d'articulation du support (200) sur l'embase (100) de la surface inférieure (104) de celle-ci.

14. Dispositif de jaugeage selon l'une des revendications 1 à 13, caractérisé par le fait que l'axe d'articulation (202) du support (200) sur l'embase (100) est prévu à proximité de la paroi supérieure (12) du réservoir (10).

15. Dispositif de jaugeage selon l'une des revendications 1 à 14, caractérisé par le fait que le support (200) est articulé sur un élément support intermédiaire (110, 120) lié à une embase (100) fixée sur une paroi (12, 16) du réservoir.

16. Dispositif de jaugeage selon la revendication 15, caractérisé par le fait que l'embase (100) est fixée sur la paroi supérieure (12) du réservoir.

17. Dispositif de jaugeage selon la revendication 16, caractérisé par le fait que l'élément support intermédiaire (110) est indexé sur le fond (14) du réservoir.

18. Dispositif de jaugeage selon la revendication 17, caractérisé par le fait que l'élément support intermédiaire (110) est guidé à translation verticale sur l'embase (100) et sollicité par un ressort (112) vers le fond (14) du réservoir.

19. Dispositif de jaugeage selon la revendication 18, caractérisé par le fait que le support (200) est articulé sur l'élément support intermédiaire (110) à proximité du fond (14) du réservoir, tandis que le patin (250) est sollicité vers la paroi supérieure (12) du réservoir.

20. Dispositif de jaugeage selon la revendication 15, caractérisé par le fait que l'embase (100) est fixée sur une paroi latérale (16) du réservoir.

21. Dispositif de jaugeage selon la revendication 20, caractérisé par le fait que l'élément support intermédiaire (120) est indexé sur la paroi supérieure (12) du réservoir.

22. Dispositif de jaugeage selon la revendication 21, caractérisé par le fait que l'élément support intermédiaire (120) est guidé à pivotement autour d'un axe horizontal (122), par une première extrémité, sur l'embase (100), tandis que sa seconde extrémité (124) est sollicitée élastiquement vers la paroi supérieure (12) du réservoir.

23. Dispositif de jaugeage selon la revendication 22, caractérisé par le fait que le support (200) est articulé autour de l'axe horizontal (202) au niveau de la seconde extrémité (124) de l'élément support intermédiaire (120) adjacent à la paroi supérieure (12) du réservoir.

24. Dispositif de jaugeage selon l'une des revendications 1 à 23, caractérisé par le fait que le patin comprend un chariot portant au moins une roue.

25. Dispositif de jaugeage selon l'une des revendications 1 à 24, caractérisé par le fait que des moyens élastiques (260) sollicitent le patin (250) contre une paroi principale (12, 14) du réservoir.

26. Dispositif de jaugeage selon l'une des revendications 1 à 25, caractérisé par le fait que l'ensemble transducteur comprend un élément résistif solidaire du support (200) et un curseur associé qui est solidaire du bras de flotteur (350).

## Claims

1. A gauge device for gauging the level and/or the volume of liquid contained in a tank, the device being of the type comprising:
a base (100) designed to be fixed to a wall of the tank;
a support (200) hinged about a horizontal axis (202) to a portion of the base inside the tank;
a shoe (250) carried at the end (204) of the support (200) that is remote from the hinge axis (202) thereof, the shoe (250) being urged towards one of the bottom or top main walls (12, 14) of the tank;
a float (300) carried by an arm (350) hinged about a horizontal axis (352) to the support (200) in order to follow the level of the liquid; and
a transducer assembly (400) comprising two elements, one carried by the hinged arm (350) and the other by the support (200);
the device being characterized by the fact that:
the hinge axis (202) of the support (200) on the base (100) is placed close to the top or bottom other main wall (12) of the tank (10);
the hinge axis (352) of the float arm (350) on the support (200) is substantially equidistant from the hinge axis (202) of the support (200) on the base (100) and the axis (252) of the shoe (250);
the distance between the hinge axis (352) of the float arm (350) on the support (200) and the hinge axis (202) of the support (200) on the base (100) is substantially equal to the distance between the hinge axis (352) of the float arm (350) on the support (200) and the axis (302) of the float (300); and
the hinge axis (202) of the support (200) on the base (100), and the axis (252) of the shoe (250) are permanently placed on the same side of a vertical plane including the hinge axis (352) of the float arm (350) on the support (200).

2. A gauge device according to claim 1, characterized by the fact that the hinge axis (202) of the support (200) on the base (100), the axis (252) of the shoe (250), the hinge axis (352) of the float arm (350) on the support (200), and the axis (302) of the float (300) are horizontal and mutually parallel.

3. A gauge device according to claim 1 or 2, characterized by the fact that the support (200) is made up of two mutually inclined elements (210, 212).

4. A gauge device according to any one of claims 1 to 3, characterized by the fact that the distance between the hinge axis (202) of the support (200) on the base (100) and the axis (252) of the shoe (250), plus both the radius of the shoe (250) and the distance between the hinge axis (202) of the support (200) on the base (100) and the bottom surface (104) of the support is greater than the maximum possible depth of the tank (10).

5. A gauge device according to any one of claims 1 to 4, characterized by the fact that the shoe (250) is a body of revolution of circular vertical right cross-section.

6. A gauge device according to any one of claims 1 to 5, characterized by the fact that the shoe (250) is rigidly fixed to the support (200).

7. A gauge device according to any one of claims 1 to 5, characterized by the fact that the shoe (250) is mounted on the support (200) to rotate about its own axis (252).

8. A gauge device according to any one of claims 1 to 7, characterized by the fact that the float (300) is rigidly fixed to the arm (350) and is a body of revolution of circular vertical right cross-section.

9. A gauge device according to any one of claims 1 to 7, characterized by the fact that the float is a body of revolution of circular vertical right cross-section and is hinged to the arm (350) about its axis.

10. A gauge device according to any one of claims 1 to 7, characterized by the fact that the float (310) is mounted to rotate on the arm (350).

11. A gauge device according to any one of claims 1 to 10, characterized by the fact that the distance (L1) between the hinge axis (202) of the support (200) on the base (100) and the bottom surface (104) of the base (100) is substantially equal to the distance (L2) between the axis (302) of the float and its top generator line (314).

12. A gauge device according to any one of claims 1 to 11, characterized by the fact that the radius (R) of the shoe (250) is at least substantially equal to the distance (L3) between the axis (302) of the float (300) and its bottom generator line (312).

13. A gauge device according to any one of claims 1 to 12, characterized by the fact that the radius (L2, L3) of the float (300) is substantially equal to the radius (R) of the shoe (250) and to the distance (L1) between the hinge axis (202) of the support (200) on the base (100) and the bottom surface (104) of the base.

14. A gauge device according to any one of claims 1 to 13, characterized by the fact that the hinge axis (202) of the support (200) on the base (100) is provided close to the top wall (12) of the tank (10).

15. A gauge device according to any one of claims 1 to 14, characterized by the fact that the support (200) is hinged on an intermediate support element (110, 120) connected to a base (100) fixed to a wall (12, 16) of the tank.

16. A gauge device according to claim 15, characterized by the fact that the base (100) is fixed to the top wall (12) of the tank.

17. A gauge device according to claim 16, characterized by the fact that the intermediate support element (110) is indexed on the bottom (14) of the tank.

18. A gauge device according to claim 17, characterized by the fact that the intermediate support element (110) is guided in vertical translation relative to the base (100) and is urged by a spring (112) towards the bottom (14) of the tank.

19. A gauge device according to claim 18, characterized by the fact that the support (200) is hinged on an intermediate support element (110) close to the bottom (14) of the tank, while the shoe (250) is urged towards the top wall (12) of the tank.

20. A gauge device according to claim 15, characterized by the fact that the base (100) is fixed on a side wall (16) of the tank.

21. A gauge device according to claim 20, characterized by the fact that the intermediate support element (120) is indexed on the top wall (12) of the tank.

22. A gauge device according to claim 21, characterized by the fact that the intermediate support element (120) is guided at a first end to pivot about a horizontal axis (122) on the base (100), while its second end (124) is resiliently urged towards the top wall (12) of the tank.

23. A gauge device according to claim 22, characterized by the fact that the support (200) is hinged about the horizontal axis (202) at the second end (124) of the intermediate support element (120) adjacent to the top wall (12) of the tank.

24. A gauge device according to any one of claims 1 to 23, characterized by the fact that the shoe comprises a carriage carrying at least one wheel.

25. A gauge device according to any one of claims 1 to 24, characterized by the fact that resilient means (260) urge the shoe (250) against one of the main walls (12, 14) of the tank.

26. A gauge device according to any one of claims 1 to 25, characterized by the fact that transducer assembly comprises a resistive element secured to the support (200) and an associated slider secured to the float arm (350).

## Patentansprüche

1. Vorrichtung zum Messen der Höhe und/oder des Volumens einer in einem Behälter enthaltenen Flüssigkeit mit
- einem Ansatzteil (100), das dazu bestimmt ist, an einer Wand des Behälters befestigt zu werden,
- einem Halter (200), der um eine horizontale Achse (202) an einem Teil des Ansatzteils im Inneren des Behälters schwenkbar ist,
- einem Gleitstück (250), das an dem Ende (204) des Halters (200) gehalten ist, das von dessen Schwenkachse (202) entfernt liegt, wobei das Gleitstück (250) gegen eine untere oder obere Hauptwand (12, 14) des Behälters vorgespannt ist,
- einem Schwimmer (300), der von einem Arm (350) gehalten ist, der um eine horizontale Achse (352) am Halter (200) schwenkbar ist, um der Höhe der Flüssigkeit zu folgen, und
- einer Wandleranordnung (400), die zwei Elemente umfaßt, von denen eines vom Schwenkarm (350) und das andere vom Halter (200) gehalten ist
dadurch gekennzeichent, daß
- die Schwenkachse (202) des Halters (200) am Ansatzteil (100) in der Nähe der jeweils anderen oberen oder unteren Hauptwand (12) des Behälters (10) angeordnet ist,
- die Schwenkachse (352) des Armes (350) des Schwimmers am Halter (200) im wesentlichen den gleichen Abstand von der Schwenkachse (202) des Halters (200) am Ansatzteil (100) und der Achse (252) des Gleitstückes (250) hat,
- der Abstand, der die Schwenkachse (352) des Armes des Schwimmers (350) am Halter (200) und die Schwenkachse (202) des Halters (200) am Ansatzteil (100) trennt, im wesentlichen gleich dem Abstand ist, der die Schwenkachse (352) des Armes des Schwimmers (350) am Halter (200) und die Achse (302) des Schwimmers (300) trennt, und
- die Schwenkachse (202) des Halters (200) am Ansatzteil (100) und die Achse (252) des Gleitstückes (250) permanent auf der selben Seite einer vertikalen Ebene angeordnet sind, die durch die Schwenkachse (352) des Arms des Schwimmers (350) am Halter (200) geht.

2. Vorrichtung zum Messen nach Anspruch 1, dadurch gekennzeichent, daß die Schwenkachse (202) des Halters (200) am Anschlußteil (100), die Achse (252) des Gleitstückes (250) die Schwenkachse (352) des Arms des Schwimmers (350) am Halter (200) und die Achse (302) des Schwimmers (300) horizontal und zueinander parallel verlaufen.

3. Vorrichtung zum Messen nach einem der Ansprüche 1 oder 2, dadurch gekennzeichnet, daß der Halter (200) aus zwei Elementen (210, 212) gebildet ist, die zueinander schräg stehen.

4. Vorrichtung zum Messen nach einem der Ansprüche 1 bis 3, dadurch gekennzeichnet, daß der Abstand, der die Schwenkachse (202) des Halters (200) am Ansatzteil (100) und die Achse (252) des Gleitstückes (250) trennt, zuzüglich des Radius des Gleitstückes (250) und des Abstandes, der die Schwenkachse (202) des Halters (200) am Ansatzteil (100) und dessen Unterfläche (104) trennt, größer als die größtmögliche Höhe des Behälters (10) ist.

5. Vorrichtung zum Messen nach einem der Ansprüche 1 bis 4, dadurch gekennzeichnet, daß das Geitstück (250) einen kreisförmigen vertikalen Querschnitt hat.

6. Vorrichtung zum Messen nach einem der Ansprüche 1 bis 5, dadurch gekennzeichnet, daß das Gleitstück (250) starr am Halter (200) befestigt ist.

7. Vorrichtung zum Messen nach einem der Ansprüche 1 bis 5, dadurch gekennzeichnet, daß das Gleitstück (250) um seine Achse (252) drehbar am Halter (200) angebracht ist.

8. Vorrichtung zum Messen nach einem der Ansprüche 1 bis 7, dadurch gekennzeichnet, daß der Schwimmer (300) starr am Arm (350) befestigt ist und einen kreisförmigen vertikalen Querschnitt besitzt.

9. Vorrichtung zum Messen nach einem der Ansprüche 1 bis 7, dadurch gekennzeichnet, daß der Schwimmer einen kreisförmigen vertikalen Querschnitt hat und um seine Achse am Arm (350) schwenkbar ist.

10. Vorrichtung zum Messen nach einem der Ansprüch 1 bis 7, dadurch gekennzeichent, daß der Schwimmer (310) drehbar am Arm (350) angebracht ist.

11. Vorrichtung zum Messen nach einem der Ansprüche 1 bis 10, dadurch gekennzeichnet, daß der Abstand (L1), der die Schwenkachse (202) des Halters (200) am Ansatzteil (100) und die Unterfläche (104) des Ansatzteils (100) trennt, im wesentlichen gleich dem Abstand (L2) ist, der die Achse (302) des Schwimmers und dessen obere Erzeugende (314) trennt.

12. Vorrichtung zum Messen nach einem der Ansprüche 1 bis 11, dadurch gekennzeichnet, daß der Radius (R) des Gleitstückes (250) wenigstens im wesentlichen gleich den Abstand (L3) ist, der die Achse (302) des Schwimmers (300) und seine untere Erzeugende (312) trennt.

13. Vorrichtung zum Messen nach einem der Ansprüche 1 bis 12, dadurch gekennzeichnet, daß der Radius (L2, L3) des Schwimmers (300) im wesentlichen gleich dem Radius (R) des Gleitstückes (250) und gleich dem Abstand (L1) ist, der die Schwenkachse (202) des Halters (200) am Ansatzteil (100) von dessen Unterfläche (104) trennt.

14. Vorrichtung zum Messen nach einem der Ansprüche 1 bis 13, dadurch gekennzeichnet, daß die Schwenkachse (202) des Halters (200) am Ansatzteil (100) in der Nähe der oberen Wand (12) des Behälters (10) vorgesehen ist.

15. Vorrichtung zum Messen nach einem der Ansprüche 1 bis 14, dadurch gekennzeichnet, daß der Halter (200) an einem Zwischenhalteelement (110, 120) schwenkbar ist, das mit einem Ansatzteil (100) verbunden ist, das fest an einer Wand (12, 16) des Behälters angebracht ist.

16. Vorrichtung zum Messen nach Anspruch 15, dadurch gekennzeichnet, daß das Ansatzteil (100) an der oberen Wand (12) des Behälters befestigt ist.

17. Vorrichtung zum Messen nach Anspruch 16, dadurch gekennzeichnet, daß das Zwischenhalteelement (110) zum Boden (14) des Behälters ausgerichtet ist.

18. Vorrichtung zum Messen nach Anspruch 17, dadurch gekennzeichnet, daß das Zwischenhalteelement (110) vertikal bewegbar am Ansatzteil (100) geführt und durch eine Feder (112) zum Boden (14) des Behälters vorgespannt ist.

19. Vorrichtung zum Messen nach Anspruch 18, dadurch gekennzeichnet, daß der Halter (200) am Zwischenhalteelement (110) in der Nähe des Bodens (14) des Behälters schwenkbar ist, wenn das Gleitstück (250) zur oberen Wand (12) des Behälters vorgespannt ist.

20. Vorrichtung zum Messen nach Anspruch 15, dadurch gekennzeichnet, daß das Ansatzteil (100) an einer Seitenwand (16) des Behälters befestigt ist.

21. Vorrichtung zum Messen nach Anspruch 20, dadurch gekennzeichnet, daß das Zwischenhalteelement (120) zur oberen Wand (12) des Behälters ausgerichtet ist.

22. Vorrichtung zum Messen nach Anspruch 21, dadurch gekennzeichnet, daß das Zwischenhalteelement (120) um eine horizontale Achse (122) an einem ersten Ende schwenkbar am Ansatzteil (100) geführt ist, während sein zweites Ende (124) elastisch zur oberen Wand (12) des Behälters vorgespannt ist.

23. Vorrichtung zum Messen nach Anspruch 22, dadurch gekennzeichnet, daß der Halter (200) um die horizontale Achse (202) auf der Höhe des zweiten Endes (124) des Zwischenhalteelmentes (120) neben der oberen Wand (12) des Behälters schwenkbar ist.

24. Vorrichtung zum Messen nach einem der Ansprüche 1 bis 23, dadurch gekennzeichnet, daß das Gleitstück einen Wagen umfaßt, der wenigstens ein Rad trägt.

25. Vorrichtung zum Messen nach einem der Ansprüche 1 bis 24, dadurch gekennzeichnet, daß elastische Einrichtungen (260) das Gleitstück (250) gegen eine Hauptwand (12, 14) des Behälters vorspannen.

26. Vorrichtung zum Messen nach einem der Ansprüch 1 bis 25, dadurch gekennzeichnet, daß die Wandleranordnung ein fest am Halter (200) angebrachtes Widerstandselement und einen zugehörigen Zeiger umfaßt, der am Arm des Schwimmers (350) befestigt ist.
